# EUROPÄISCHE PATENTSCHRIFT

(11) **EP 3 289 244 B1**
(45) Veröffentlichungstag und Bekanntmachung des Hinweises auf die Patenterteilung: **13.03.2019**
(21) Anmeldenummer: 16719209.5
(22) Anmeldetag: 25.04.2016
(51) Int. Cl.: F16H 47/04, B60K 25/02, B60K 17/28, B60K 25/06, F16H 3/72, E01C 23/088

(54) **ARBEITSMASCHINE MIT LEISTUNGSVERZWEIGBAREM ANTRIEB**
WORKING MACHINE WITH POWER-BRANCHING DRIVE
ENGIN DE TRAVAIL À REPARTITION DE PUISSANCE

(30) Priorität: 27.04.2015 DE 202015003054 U; 24.06.2015 DE 202015004528 U
(43) Veröffentlichungstag der Anmeldung: 07.03.2018
(73) Patentinhaber: Liebherr-Components Biberach GmbH, 88400 Biberach an der Riß (DE)
(72) Erfinder: CHRIST, Clemens, 88400 Biberach (DE); SCHINDLER, Viktor, 88524 Uttenweiler (DE); HAUSLADEN, Norbert, 88400 Biberach (DE)
(74) Vertreter: Thoma, Michael
(86) Internationale Anmeldenummer: PCT/EP2016/000663
(87) Internationale Veröffentlichungsnummer: WO 2016/173706

(56) Entgegenhaltungen:
- DE-A1- 19 812 500
- DE-A1-102012 006 189
- US-A- 3 597 998
- US-A- 4 750 381
- US-A1- 2003 036 451

## Beschreibung

Die vorliegende Erfindung betrifft eine Arbeitsmaschine in Form eines Oberflächenfräsers, mit einem Arbeitsaggregat, das von einem Motor her antreibbar ist, wobei der Motor über ein Leistungsverzweigungsgetriebe umfassend einen mechanischen ersten Leistungszweig und einen elektrischen oder hydraulischen zweiten Leistungszweig mit dem Arbeitsaggregat verbindbar ist, wobei die ersten und zweiten Leistungszweige durch ein Summiergetriebe zusammengeführt sind, das abtriebsseitig mit dem Arbeitsaggregat koppelbar ist und ein variables Übersetzungsverhältnis zwischen dem mechanischen ersten Leistungszweig und dem Arbeitsaggregat vorsieht, das durch die Drehzahl des elektrischen oder hydraulischen zweiten Leistungszweigs einstellbar ist.

Antriebsstränge mit einem Leistungsverzweigungsgetriebe, dessen Leistungszweige in einem Summiergetriebe zusammengeführt werden, sind aus den Schriften US 3 597 998 A, DE 198 12 500 A1, US 2003/036451 A1 und US 4 750 381 A bekannt.

Bei Oberflächenfräsern wie Asphaltfräsen oder Tagebau-Abraumgeräten wie Surface Minern, aber auch anderen Baumaschinen oder beispielsweise großen Schneefräsen werden zum Antreiben des Arbeitsaggregats - beispielsweise des Fräsrotors - gerne Dieselmotoren oder allgemein Verbrennungsmotoren oder bisweilen auch Elektromotoren eingesetzt, insbesondere wenn die Arbeitsmaschine verfahrbar oder selbstfahrend ausgebildet ist, da hier einerseits der Verbrennungsmotor gleichzeitig als Fahrantrieb dienen kann und zum anderen die Energieversorgung der Arbeitsmaschine auch bei mobilem Einsatz unproblematisch ist. Bei geringen Verfahrwegen oder auch in elektrifizierten Minen- oder Tagebauanwendungen werden bisweilen auch Elektromotoren eingesetzt, die von einem Netz her versorgt werden. Da die Arbeitsaggregate oft mit einer konstanten Arbeitsgeschwindigkeit beziehungsweise Drehzahl oder in einem nur begrenzten Drehzahlfenster beziehungsweise Arbeitsgeschwindigkeitsfenster betrieben werden, wird das Arbeitsaggregat direkt mit einem festen Übersetzungsverhältnis an den Verbrennungsmotor angekoppelt, wobei hier natürlich eine Kupplung zum An- und Abkuppeln des Arbeitsaggregats an den Verbrennungsmotor vorgesehen sein kann, beispielsweise um das Starten des Verbrennungsmotors zu erleichten und das Arbeitsaggregat abschalten zu können.

Bei einer solchen Anbindung des Arbeitsaggregats an den Verbrennungsmotor mit Festübersetzung wird die Drehzahl beziehungsweise Arbeitsgeschwindigkeit des Arbeitsaggregats durch Drehzahlveränderung des Verbrennungsmotors gesteuert, was in vielen Fällen ausreichend, jedoch mitunter nachteilbehaftet ist. Dabei bedarf es eines zusätzlichen, üblicherweise stufenlosen Fahrantriebsgetriebes, wenn der Verbrennungsmotor gleichzeitig als Fahrantrieb dient und die Fahrgeschwindigkeit nicht zwangsweise an die Drehzahl des Arbeitsaggregats gekoppelt sein soll. Zum anderen wird der Verbrennungsmotor oft auch in einem Drehzahlbereich betrieben, in dem das Drehmoment des Verbrennungsmotors und/oder sein Wirkungsgrad mehr oder minder deutlich abfällt.

Um hier Abhilfe zu schaffen, schlägt die Schrift DE 10 2012 006 189 A1 vor, den Verbrennungsmotor über ein Leistungsverzweigungsgetriebe an das Arbeitsaggregat anzubinden, wobei ein Teil der Antriebsleistung über einen mechanischen Antriebsstrang und ein anderer Teil der Antriebsleistung über einen elektrischen oder hydraulischen zweiten Leistungszweig übertragen wird. Die beiden Leistungszweige werden in einem als Planetengetriebe ausgebildeten Summiergetriebe zusammengeführt, welches es ermöglicht, durch Verstellung der Drehzahl des elektrischen oder hydraulischen Wandlers das Übersetzungsverhältnis zwischen dem mechanischen Leistungszweig und der Abtriebsseite des Summiergetriebes zu variieren, sodass die Arbeitsgeschwindigkeit beziehungsweise Drehzahl des Arbeitsaggregats gegenüber der Drehzahl des Verbrennungsmotors variiert werden kann. Diese durch die Leistungsverzweigung und das Summiergetriebe erzielte Spreizung zwischen Verbrennungsmotor-Drehzahl und Arbeitsaggregat-Arbeitsgeschwindigkeit ermöglicht es beispielsweise bei einem Oberflächenfräser, beispielsweise Asphaltfräser, beim sogenannten Feinfräsen - beispielsweise beim Abfräsen einer Teerdecke - eine sehr hohe Drehzahl zu fahren und damit eine entsprechend hohe Schnittgeschwindigkeit an der Fräswalze zu erzeugen, während beispielsweise beim Schruppen eine kleinere Drehzahl bei gleichzeitig hohem Moment und damit kleine Schnittgeschwindigkeit der Fräswalze eingestellt werden kann, um die Abtragsmenge zu vergrößern und gleichzeitig einen kleineren Energieeinsatz zu benötigen, da recht große Schollen aus der Teerdecke brechen. Zum anderen ist es durch die genannte Leistungsverzweigung auch möglich, bei kleineren Rotordrehzahlen beziehungsweise Arbeitsgeschwindigkeiten des Arbeitsaggregats höhere Antriebsmomente zu fahren, da das Abtriebsmoment nicht direkt von der Verbrennungsmotor-Kennlinie abhängig ist. Trotz reduzierter Arbeitsgeschwindigkeit des Arbeitsaggregats kann der Verbrennungsmotor in einem Drehzahlbereich günstigen Drehmoments und somit hoher Leistung gefahren werden, wodurch beispielsweise das vorgenannte Schruppen bei Oberflächenfräsern mit kleineren Fräswalzendrehzahlen beziehungsweise Schnittgeschwindigkeiten durchgeführt werden kann. Hierdurch wird weniger Leistung am Arbeitsaggregat benötigt, was wiederum den Spritverbrauch des Verbrennungsmotors senken kann. Zum anderen können durch die Leistungsverzweigung und die damit erzielte Spreizung auch höhere Drehzahlen am Fräsrotor eingestellt werden. Es kann aber die volle Leistung über ein breites Drehzahlband bereitgestellt werden.

Andererseits treten durch die genannte Leistungsverzweigung Wirkungsgradverluste auf, die im hydraulischen zweiten Leistungszweig durch hydraulische Verluste wie Schleppverluste, Leckölverluste und dergleichen entstehen. Gegenüber einem rein mechanischen Direktantrieb des Arbeitsaggregats mit Festübersetzung steigt daher der Energieverbrauch, zumindest wenn man das Lastkollektiv betrachtet, in dem der Verbrennungsmotor in einem drehmoment- und verbrauchsgünstigen Drehzahlbereich arbeitet. Dieses Lastkollektiv kann beispielsweise bei einem Oberflächenfräser einen recht großen Anteil an der gesamten Betriebszeit der Arbeitsmaschine ausmachen, wenn man davon ausgeht, dass viele für die jeweilige Arbeitsmaschine typische Arbeiten in einem Standardbetriebszustand ausgeführt werden. Beispielsweise werden bei einem Asphaltfräser viele Arbeiten mit einer Standarddrehzahl der Fräswalze ausgeführt, die sich bei einer Festübersetzung in einem drehmoment- und verbrauchsgünstigen Drehzahlbereich des Verbrennungsmotors abbilden lässt.

Insofern werden Verbrauchs- und Leistungsvorteile, die man mit einer Leistungsverzweigung für verschiedene, spezielle Betriebsbereiche erzielen kann, durch einen Wirkungsgradverlust und eine damit einhergehende Verbrauchsvergrößerung im Standardbetriebsbereich erkauft.

Hiervon ausgehend liegt der vorliegenden Erfindung die Aufgabe zugrunde, eine verbesserte Arbeitsmaschine der eingangs genannten Art zu schaffen, die Nachteile des Standes der Technik vermeidet und letzteren in vorteilhafter Weise weiterbildet. Insbesondere sollen Sonderaufgaben mit stark erhöhten oder erniedrigten Arbeitsgeschwindigkeiten des Arbeitsaggregats in einem drehmoment- und/oder verbrauchsgünstigen Drehzahlbereich des Verbrennungsmotors ausführbar sein, ohne dies durch einen Wirkungsgradverlust und Verbrauchsnachteile bei Standardaufgaben zu erkaufen.

Erfindungsgemäß wird die genannte Aufgabe durch eine Arbeitsmaschine gemäß Anspruch 1 gelöst. Bevorzugte Ausgestaltungen der Erfindung sind Gegenstand der abhängigen Ansprüche.

Es wird also vorgeschlagen, den elektrischen oder hydraulischen Leistungszweig der Leistungsverzweigung zwischen Hauptmotor und Arbeitsaggregat zu- und abschaltbar auszubilden, sodas die elektrische und/oder hydraulische Leistungsverzweigung nur dann verwendet werden kann/muss, wenn sie tatsächlich benötigt wird. Die Leistungsverzweigung ist für Standardarbeiten, die sich mit Festübersetzung in einem Drehmoment und/oder verbrauchsgünstigen Drehzahlbereich des Hauptmotors ausführen lassen, deaktivierbar, sodass das Arbeitsaggregat alleine über den mechanischen Zweig antreibbar ist, wobei ein mechanischer Antriebsstrang zwischen dem Hauptmotor und dem Arbeitsaggregat ein festes Übersetzungsverhältnis besitzen kann und Verluste im hydraulischen oder elektrischen Leistungszweig vermieden beziehungsweise zumindest signifikant reduziert werden können. Erfindungsgemäß ist eine Sperrvorrichtung zum Sperren der Veränderbarkeit des Übersetzungsverhältnisses des Summiergetriebes, das zwischen dem mechanischen ersten Leistungsstrang und der Abtriebsseite des Summiergetriebes durch die Drehzahl des elektischen oder hydraulischen zweiten Leistungsstrangs einstellbar ist, vorgesehen. Wird die genannte Veränderbarkeit des Übersetzungsverhältnisses durch den elektrischen oder hydraulischen zweiten Leistungsstrang gesperrt, ist der mechanische Leistungsszweig direkt drehzahlfest auf die Abtriebsseite des Summiergetriebes und damit das Arbeitsaggregat durchgeschaltet, sodass die volle Antriebsleistung rein mechanisch vom Verbrennungs- bzw. Hauptmotor auf das Arbeitsaggregat übertragen wird und im elektrischen oder hydraulischen zweiten Leistungszweig entstehende Verluste vermieden werden können. Der elektrische oder hydraulische Leistungsweig wird nicht mehr benötigt, um über den mechanischen Zweig Leistung durch das Summiergetriebe hindurch auf das Arbeitsaggregat übertragen zu können. Die Antriebsverbindung zwischen Verbrennungs- bzw. Hauptmotor und Arbeitsaggregat ist also veränderbar ausgebildet und von einer Leistungsverzweigung auf eine Festübersetzung umschaltbar ausgeführt.

Durch die genannte Sperrvorrichtung kann insbesondere die Hydraulik der Leistungsverzweigung aus dem Antriebsstrang genommen werden, so dass dann lediglich die Pumpe am Pumpenverteilergetriebe im Leerlauf mitdrehen kann. Dadurch wird der Wirkungsgrad verbessert. Durch Blockieren des zusätzlichen Leistungsflusses mit mindestens einer mechanischen verlustfreien Sperrvorrichtung kann der Wirkungsgrad des Antriebsstranges wesentlich verbessert werden, weil in diesem Fall der hydraulische Leistungsfluss nicht mehr benötigt wird. Die entstandenen Leckölverluste und mechanischen Verluste zur Aufrechterhaltung des Hydraulikdruckes, auch im Stillstand (Halten), kommen somit nicht mehr zum Tragen. Somit kann Energie eingespart werden.

Des Weiteren kann bei einem Defekt der Hydraulik die Maschine bei geschlossener Sperrvorrichtung weiterarbeiten, wobei das Arbeitsaggregat dann zwar nur mit den Drehzahlen des Direktantriebs betrieben werden kann, aber die Fräsarbeiten auf der Baustelle beendet werden können, was meistens zeitkritisch ist wie z.B. bei einer Sperrung der Autobahn.

Das Überbrücken des elektrischen oder hydraulischen zweiten Leistungszweigs kann grundsätzlich in verschiedener Art und Weise erfolgen. In Weiterbildung der Erfindung kann die vorgenannte Sperrvorrichtung eine Haltevorrichtung umfassen, mittels derer der Getriebeeingangsstrang oder allgemein ein Strang des Summiergetriebes, an den der genannte elektrische oder hydraulische zweite Leistungszweig angebunden ist, festgesetzt werden kann und/oder fest an einen Getriebestrang, an den der mechanische erste Leistungszweig angebunden ist, angekoppelt werden kann. Dies kann der Summiergetriebeeingangsstrang sein, mit dem der mechanische erste Leistungszweig antriebsverbunden ist, oder auch ein anderes Getriebelement des Summiergetriebes, an das der mechanische erste Leistungszweig angebunden ist, um durch das feste Ankuppeln die Veränderbarkeit des Übersetzungsverhältnisses zu sperren.

Durch die genannte Haltevorrichtung kann die Leistungsverzweigung deaktiviert und/oder der elektrische oder hydraulische zweite Leistungszweig überbrückt werden, indem ein Getriebeelement, das der Verstellung des Übersetzungsverhältnisses zwischen mechanischem Leistungszweig und Abtriebsseite dient und mit dem elektrischen oder hydraulischen zweiten Leistungszweig drehfest verbunden ist, gänzlich stillgesetzt wird oder fest an den Getriebestrang angebunden wird, der vom mechanischen ersten Leistungszweig her angetrieben wird. Durch Sperren des Freiheitsgrads des Getriebeeingangsstrangs, an den der zweite Leistungszweig angebunden ist, kann die im zweiten Leistungszweig wirkende Leistung auf null gefahren beziehungsweise abgesenkt werden, da sie nicht mehr benötigt wird. Die gesamte Antriebsleistung wird über den mechanischen ersten Leistungszweig in das Summiergetriebe und vom Verbrennungsmotor auf das Arbeitsaggregat übertragen.

Die genannte Haltevorrichtung kann in Weiterbildung der Erfindung eine Bremse umfassen, die ein vom genannten zweiten Leistungszweig her antreibbares Getriebeelement direkt oder indirekt stillsetzen kann. Eine solche Bremse kann unmittelbar am zu blockierenden Getreibeelement angreifen oder dieses über eine damit in Verbindung stehendes weiteres Getriebeelement beaufschlagen. Beispielsweise kann die genannte Bremse das genannte Getriebeelement an einem Getriebegehäuseabschnitt festsetzen, sodass sich das genannte Getriebeelement nicht mehr drehen lässt.

Die genannte Bremse kann hierbei verschieden ausgebildet sein, beispielsweise in Form einer Lamellenbremse oder einer anderen Reibungsbremse. Alternativ kann auch eine formschlüssig wirkende Bremse beispielsweise in Form einer Klauenbremse oder Klauenkupplung vorgesehen sein, mit Hilfe derer das genannte Getriebeelement stillsetzbar ist. Alternativ oder zusätzlich zu einer solchen Klauenkupplung kann auch vorgesehen sein, das genannte Getriebeelement durch eine andere, vorzugsweise lösbare Verbindung festzusetzen, beispielsweise an einem Gehäuseteil oder einem anderen Bauteil festzuschrauben. Hierdurch kann nach dem Baukastenprinzip bei ansonsten unveränderter Bauweise ein Festübersetzungsantrieb realisiert werden, bei dem die Leistungsverzweigung weggelassen werden kann, wenn dies ein Anwender bzw. Kunde wünscht.

Durch vollständiges Stillsetzen des genannten Getriebeeingangsstrangs können Verluste im Bereich des daran angeschlossenen elektrischen oder hydraulischen Energiewandlers gänzlich vermieden werden, da sich dieser im stillgesetzten Zustand nicht mehr dreht und damit keine Verluste mehr erzeugt.

In alternativer Weiterbildung der Erfindung kann die Haltevorrichtung auch eine Kupplung umfassen, mittels derer der genannte Getriebeeingangsstrang, der vom elektrischen oder hydraulischen Leistungszweig her antreibbar ist, fest an den anderen Getriebeeingangsstrang, der vom mechanischen Leistungszweig her antreibbar ist, ankuppelbar ist, sodass sich die beiden Getriebeeingangsstränge miteinander bzw. in einem festen Drehzahlverhältnis zueinander drehen. Dabei kann die genannte Kupplung eine direkte drehfeste Verbindung der beiden Getriebeeingangsstränge miteinander vorsehen, sodass sich die beiden Getriebeeingangsstränge synchron miteinander drehen. Alternativ kann die Kupplung auch eine Anbindung des genannten Getriebeeingangsstrangs, an das der elektrische oder hydraulische zweite Leistungszweig angebunden ist, an ein anderes Getriebeelement drehzahlfest angebunden wird, welches gegenüber dem Getriebeeingangsstrang, an das der mechanische erste Leistungszweig angebunden ist, drehzahlunter- oder -übersetzt dreht.

Bei einem solchen drehzahlfesten Ankuppeln des mit dem hydraulischen oder elektrischen zweiten Leistungszweig verbundenen Getriebeeingangsstrangs dreht sich der damit verbundene elektrische oder hydraulische Energiewandler mit entsprechender Drehzahl mit, wobei der genannte Energiewandler jedoch im Leerlauf betrieben werden kann, um Schleppverluste oder Drehwiderstände zu minimieren.

Die genannte Sperrvorrichtung zum Sperren der Veränderbarkeit des Übersetzungsverhältnisses beziehungsweise zum Überbrücken des elektrischen beziehungsweise hydraulischen zweiten Leistungszweigs kann vorteilhafter Weise in das Summiergetriebe integriert sein. Insbesondere kann die vorgenannte Bremse und/oder Kupplung im Inneren des Getriebegehäuses des Summiergetriebes angeordnet sein.

Das genannte Summiergetriebe kann verschieden gestaltet sein, wobei nach einer vorteilhaften Ausführung der Erfindung ein Planetengetriebe als Summiergetriebe vorgesehen sein kann, wobei das genannte Planetengetriebe einstufig oder mehrstufig ausgebildet sein kann.

Die beiden Leistungszweige des Leistungsverzweigung können hierbei grundsätzlich in verschiedener Weise in das genannte Planetengetriebe geführt sein. In vorteilhafter Weiterbildung der Erfindung kann der mechanische erste Leistungszweig einen Steg des Planetengetriebes antreiben, an den Planetenräder drehbar gelagert sind, wobei eine von dem Verbrennungsmotor angetriebene Getriebeeingangswelle unmittelbar der genannte Steg sein kann, oder in alternativer Weiterbildung der Erfindung über eine Getriebestufe beispielsweise in Form einer Stirnradstufe den genannten Steg antreiben kann. Eine solche Getriebe- bzw. Stirnradstufe kann beispielsweise vorteilhaft sein, um die Getriebeeingangswelle exzentrisch beziehungsweise außermittig vorsehen zu können.

Der elektrische oder hydraulische zweite Leistungszweig kann auf das Sonnenrad der Planetenstufe gehen, wobei eine vom elektrischen oder hydraulischen Energiewandler antreibbare zweite Getriebeeingangswelle direkt mit dem genannten Sonnenrad verbunden sein kann oder das Sonnenrad unter Zwischenschaltung einer Getriebestufe beispielsweise in Form einer Stirnradstufe antreiben kann.

Das von den Planetenrädern angetriebene Hohlrad kann die Abtriebsseite der Planetenstufe bilden und direkt das Arbeitsaggregat antreiben, beispielsweise direkt mit der Fräswalze des Oberflächenfräsers verbunden sein. Alternativ kann das genannte Hohlrad die Eingangswelle einer zweiten Planetenstufe bilden und/oder mit einer Abtriebswelle verbunden sein, die die Eingangswelle einer weiteren Getriebestufe bildet.

Die vorgenannte Bremse, mittels derer die vom elektrischen oder hydraulischen Energiewandler antreibbare zweite Getriebeeingangswelle festsetzbar ist, kann in Weiterbildung der Erfindung unmittelbar das genannte Sonnenrad festsetzen oder ein damit drehfest verbundenes weiteres Getriebeelement festsetzen, beispielsweise ein Stirnrad einer Stirnradstufe, die mit dem genannten Sonnenrad fest verbunden ist.

Umfasst die zuvor genannte Sperrvorrichtung eine Kupplung zum Sperren der beiden Getriebeeingangswellen zueinander, kann die genannte Kupplung beispielsweise das vorgenannte Sonnenrad drehfest an den Steg ankuppeln, der vorm Verbrennungsmotor beziehungsweise dem davon angetriebenen mechanischen ersten Leistungszweig angetrieben wird, sodass der genannte mechanische erste Zweig sowohl den Steg als auch das Sonnenrad der Planetenstufe antreibt. Der mechanische Antriebsstrang ist dann mit einer Festübersetzung auf das Hohlrad und damit die Abtriebsseite des Summiergetriebes durchgeschaltet.

Die Erfindung wird nachfolgend anhand bevorzugter Ausführungsbeispiele und zugehöriger Zeichnungen näher erläutert. In den Zeichnungen zeigen:

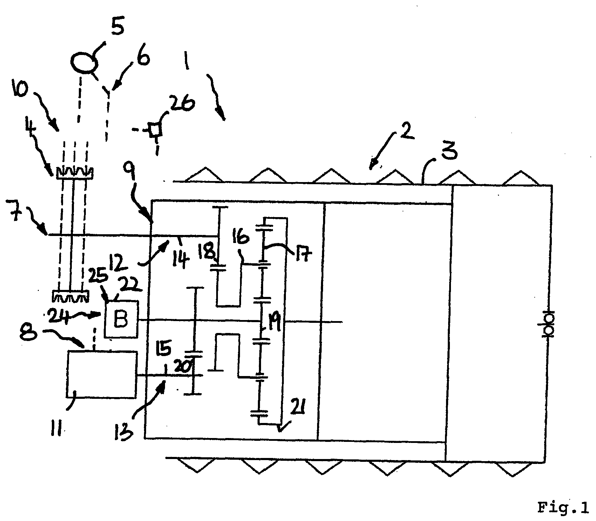

- Fig. 1:: Eine ausschnittsweise, schematische Darstellung der Fräswalze eines Oberflächenfräsers und des darin vorgesehenen Summiergetriebes, das zwei Getriebeeingangsstränge besitzt, von denen einer durch eine direkt angebundene Bremse festgesetzt werden kann und der andere mit einem mechanischen Antriebsstrang und einem damit angebundenen Verbrennungsmotor verbunden ist,

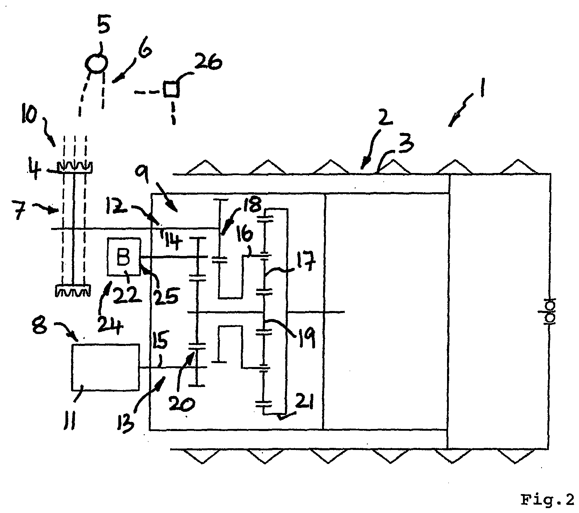

- Fig. 2:: Eine ausschnittsweise, schematische Darstellung der Fräswalze eines Oberflächenfräsers ähnlich Fig. 1, wobei eine Bremse zum Festsetzen eines der beiden Getriebeeingangsstränge des Summiergetriebes indirekt über eine Getriebestufe an diesen Getriebeeingangsstrang angebunden ist,

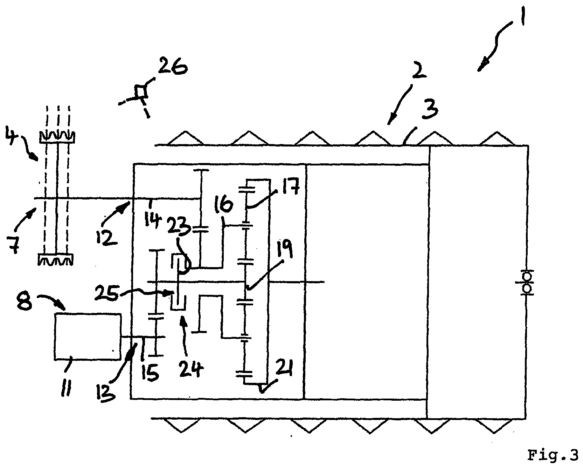

- Fig. 3:: Eine ausschnittsweise schematische Darstellung der Fräswalze eines Oberflächenfräsers und des darin aufgenommenen Summiergetriebes ähnlich den vorhergehenden Figuren, wobei die beiden Getriebeeingangsstränge durch eine Kupplung miteinander fest kuppelbar sind,

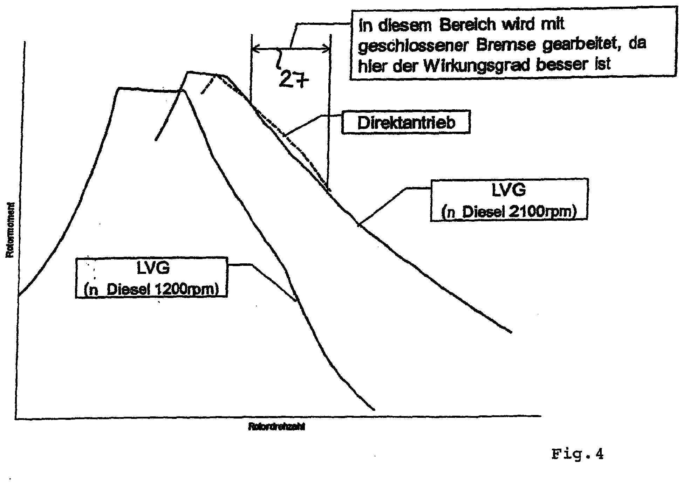

- Fig. 4:: Eine vergleichende Darstellung des Verlaufs des Rotordrehmoments über der Rotordrehzahl, wobei einerseits mit durchgezogener Linie der Drehmomentverlauf mit Leistungsverzweigung, das heißt geöffneter Bremse und/oder geöffneter Kupplung und andererseits mit gestrichelter Linie der Drehmomentverlauf bei geschlossener Bremse und/oder geschlossener Kupplung beziehungsweise überbrücktem hydraulischen Leistungszweig dargestellt ist,

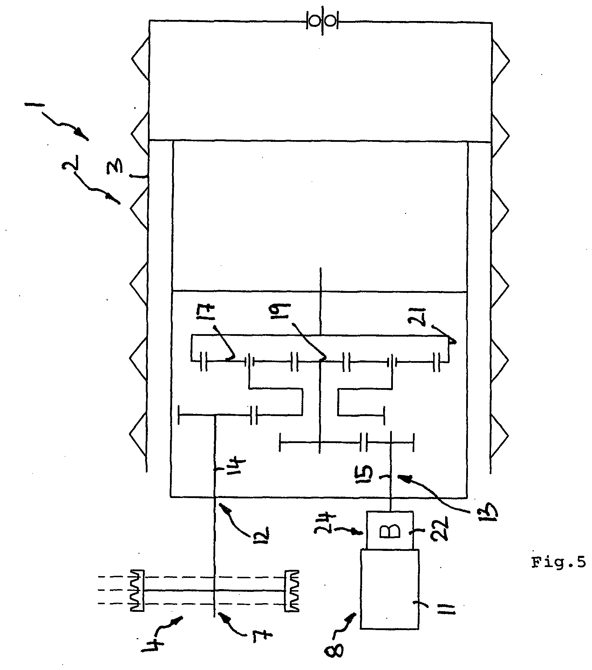

- Fig. 5:: Eine ausschnittsweise, schematische Darstellung der Fräswalze eines Oberflächenfräsers ähnlich Fig. 1, wobei eine Bremse zum Festsetzen des mit dem elektrischen oder hydraulischen Leistungszweig antriebsverbundenen Summiergetriebestrangs am Energiewandler des elektrischen oder hydraulischen Leistungszweigs bzw. der damit verbundenen Summiergetriebeeingangswelle angebunden ist, und

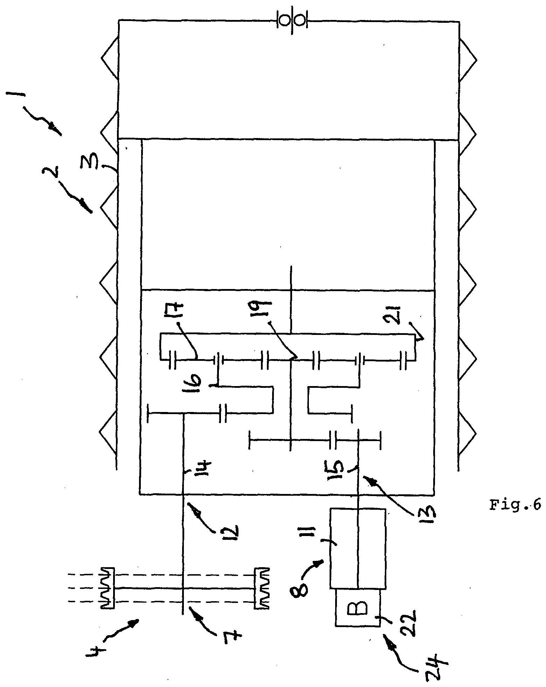

- Fig. 6:: Eine ausschnittsweise, schematische Darstellung der Fräswalze eines Oberflächenfräsers ähnlich Fig. 5, wobei eine Bremse zum Festsetzen des mit dem elektrischen oder hydraulischen Leistungszweig antriebsverbundenen Summiergetriebestrangs am Energiewandler des elektrischen oder hydraulischen Leistungszweigs angebunden ist.

Die in den Figuren nur ausschnittsweise und schematisch dargestellte Arbeitsmaschine 1 kann als Arbeitsaggregat 2 einen rotatorisch antreibbaren Arbeitsrotor 3 umfassen, der die Fräswalze eines Oberflächenfräsers wie beipielsweise eines Asphaltfräsers ist. Der genannte Arbeitsrotor 3 kann dabei - grob gesprochen - einen zylindrischen, länglichen und/oder rohrförmigen Rotorkorpus besitzen, an dessen Außenumfang Arbeitswerkzeuge wie beispielsweise Fräsmeißel angeordnet sein können.

Der genannte Arbeitsrotor 3 kann von einem nur schematisch angedeuteten Verbrennungsmotor 5 her angetrieben werden, der gleichzeitig auch noch andere Hilfsaggregate der Arbeitsmaschine 1 antreiben und auch als Fahrantrieb der Arbeitsmaschine 1 dient, wenn die genannte Arbeitsmaschine 1 selbstfahrend ausgebildet ist. Der genannte Verbrennungsmotor 5 kann ggf. auch ein anderer Motor sein, beispielsweise ein Elektromotor, wenn dies die Energieversorgung zulässt.

Der genannte Motor, insbesondere Verbrennungsmotor 5 kann dabei über ein Leistungsverzweigungsgetriebe 6 mit dem genannten Arbeitsrotor 3 verbunden sein, wobei das genannte Leistungsverzweigungsgetriebe 6 zumindest einen mechanischen ersten Leistungszweig 7 und einen elektrischen oder hydraulischen zweiten Leistungszweig 8 umfassen kann. Die beiden Leistungszweige 7 und 8 werden in einem Summiergetriebe 9 zusammengeführt, das vorteilhafter Weise in einem von dem Arbeitsrotor 3 umgebenen Rotorinnenraum aufgenommen sein kann.

Der genannte erste mechanische Leistungszweig 7 kann ein mechanischer Antriebsstrang sein, der direkt oder unter Zwischenschaltung einer oder mehrerer Getriebestufen 10 an die Kurbelwelle des Verbrennungsmotors 5 angeschlossen sein kann. Wie Fig. 1 zeigt, kann die genannte Getriebestufe 10 beispielsweise eine Riemen- oder Kettentriebstufe 4 umfassen. Der genannte mechanische Antriebsstrang, der den ersten Leistungszweig 7 bildet, kann dabei auch eine Kupplung umfassen, um den Verbrennungsmotor 5 vom Arbeitsaggregat 2 an- und abkuppeln zu können.

Der zuvor genannte elektrische oder hydraulische zweite Leistungszweig 8 umfasst zumindest einen elektrischen oder hydraulischen Energiewandler 11, der elektrische oder hydraulische Antriebsenergie in eine mechanische, insbesondere rotatorische Antriebsbewegung umsetzt. Bei elektrischer Leistungsverzweigung kann der genannte Energiewandler 11 ein Elektromotor sein. Bei hydraulischer Ausbildung des Energiewandlers 11 kann dieser ein vorzugsweise verstellbarer Hydrostat sein, bzw. ein Hydraulikmotor, beispielsweise in Form eines verstellbaren Schrägscheiben-/Achsialkolbenmotors, wobei jedoch auch andere Wandlerausbildungen möglich sind.

Die elektrische oder hydraulische Versorgung des genannten Energiewandlers 11 kann durch einen elektrischen Generator oder eine hydraulische Pumpe, die nicht eigens dargestellt sind, erfolgen, wobei der genannte Generator oder die genannte Pumpe vom Verbrennungsmotor 5 angetrieben werden kann.

Um die beiden genannten Leistungszweige 7 und 8 im Summiergetriebe 9 zusammenführen zu können, kann das genannte Summiergetriebe 9 zwei Getriebeeingangsstränge 12 und 13 umfassen, an die der mechanische, vom Verbrennungsmotor 5 her kommende Antriebsstrang einerseits und der Energiewandler 11 andererseits drehfest angebunden sind. Hierbei kann eine permanente, drehfeste Verbindung vorgesehen sein oder es kann eine Kupplung zwischengeschaltet sein, um den mechanischen Antriebsstrang und/oder den Energiewandler vom Summiergetriebe 9 abkuppeln zu können. Als Getriebeeingangselemente, an die die genannten Leistungszweige 7 und 8 angebunden sind, können die genannten Getriebeeingangsstränge eine Getriebeeingangswelle oder auch ein Getriebeeingangsritzel oder ein Getrieberad aufweisen, die bzw. das die Eingangsleistung in das Getriebe leitet, in dem dann die beiden eingehenden Leistungen aufsummiert werden.

Wie Fig. 1 zeigt, kann das genannte Summiergetriebe 9 als Planetengetriebe ausgebildet sein, wobei das genannte Planetengetriebe einstufig oder auch mehrstufig ausgebildet sein kann.

Wie Fig. 1 zeigt, kann eine erste Getriebeeingangswelle 14, die mit dem mechanischen ersten Leistungszweig 7 verbunden sein kann, einen Steg 16 des Planetengetriebes antreiben, der eine Mehrzahl von Planetenrädern 17 tragen kann. Die genannte erste Getriebeeingangswelle 14 kann den Steg 16 dabei über eine Stirnradstufe 18 antreiben, ggfs. aber auch direkt vom Steg 16 gebildet sein.

Die zweite Getriebeeingangswelle 15 kann ein Sonnenrad 19 des Planetengetriebes antreiben, wobei das Sonnenrad 19 direkt mit der zweiten Eingangswelle 15 verbunden sein oder unter Zwischenschaltung einer Stirnradstufe 20 daran angebunden sein kann.

Wie Fig. 1 zeigt, treiben die am Steg 16 drehbar gelagerten Planetenräder 17, die mit dem genannten Sonnenrad 19 kämmen bzw. damit in Wälzeingriff stehen, ein Hohlrad 21 des Planetengetriebes, das die Abtriebsseite des Planetengetriebes bilden kann. Das genannte Hohlrad 21 kann direkt mit dem Arbeitsrotor 3 verbunden sein oder alternativ auch die Eingangswelle einer weiteren Planetengetriebestufe bilden, welche dann abtriebsseitig mit dem Arbeitsrotor 3 verbunden sein kann. Das Summiergetriebe kann ggf. durch eine Kupplung mit dem Arbeitsrotor 3 verbunden sein, um diesen bspw. für Wartungszwecke vom Antriebsstrang abkuppeln zu können.

Das genannte Sonnenrad 19 kann durch eine Bremse 22 festgesetzt werden, die das genannte Sonnenrad 19 beispielsweise an einem Getriebegehäuse des Summiergetriebes 9 festhalten kann. Die Bremse 22 kann hierbei unmittelbar auf das genannte Sonnenrad 19 wirken, wie dies Fig. 1 zeigt, oder indirekt auf das Sonnenrad 19 einwirken, beispielsweise unter Zwischenschaltung einer Getriebestufe, die eine Stirnradstufe sein kann, wie dies Fig. 2 zeigt.

Eine solche Bremse kann auch in den Energiewandler 11 integriert bzw. diesem zugeordnet sein, beispielsweise in Form einer unmittelbar an einem Elektromotor, der als Energiewandler 11 fungiert, vorgesehenen Bremse 22, wie dies die Figuren 5 und 6 zeigen. Dabei kann die Bremse 22 an der Getriebeeingangswelle 15, mit der der Energiewandler 11 antriebsverbunden ist, oder auch einer Ausgangswelle des Enegiewandlers 11, ggf. auch einer Wandlergetriebewelle eines Wandlerabtriebsgetriebes, angebunden sein, vgl. Fig. 5. Alternativ kann die Bremse 22 dabei auch direkt am Energiewandler 11 sitzen, beispielsweise an der Motorwelle eines Elektromotors auf der der Getriebeeingangswelle 15 gegenüberliegenden Seite des Elektromotors, vgl. Fig. 6.

Die genannte Bremse 22 kann hierbei als Reibbremse beispielsweise in Form einer Lamellenbremse oder auch als formschlüssige Bremse beispielsweise in Form einer Klauenkupplung bzw. - bremse ausgebildet sein.

Wie Fig. 3 zeigt, kann das Sonnenrad 19 auch drehfest an den Steg 16 angebunden werden, wobei hier eine Kupplung 23 zwischen dem Steg 16 und dem Sonnenrad 19 vorgesehen sein kann, um die beiden Getriebeeingangsstränge 12 und 13 miteinander drehfest zu kuppeln. Die genannte Kupplung 23 könnte aber auch zwei andere Getriebeelemente bzw. -stränge des Summiergetriebes miteinander kuppeln, um die Veränderbarkeit des Übersetzungsverhältnisses festzusetzen, wobei einer der zu kuppelnden Getriebestränge mit dem elektrischen/hydraulischen Leistungsweig antriebsverbunden und der andere mit dem mechanischem Leistungszweig antriebsverbunden sein kann, so dass der elektrische/hydraulische Zweig mit dem mechanischem Zweig mitläuft.

Die genannte Bremse 22 und die Kupplung 23 sind jeweils Teil einer Sperrvorrichtung 24, mittels derer das Übersetzungsverhältnis zwischen dem mechanischen ersten Leistungszweig 7 und der Abtriebsseite des Summiergetriebes 9 festgesetzt werden kann, um das Arbeitsaggregat 2 mit einer Festübersetzung vom Verbrennungsmotor 5 her anzutreiben.

Die genannte Bremse 22 und/oder die Kupplung 23 können dabei manuell und/oder halbautomatisch und/oder vollautomatisch betätigbar ausgebildet sein. Erfindungsgemäß ist zur Betätigung der genannten Sperrvorrichtung 24 umfassend die genannte Bremse 22 oder die Kupplung 23 eine Steuervorrichtung 26 vorgesehen, die in Abhängigkeit der Drehzahl des Arbeitsrotors 3 und in Abhängigkeit der Drehzahl des Verbrennungsmotors 5 arbeitet.

Dabei wird der elektrische oder hydraulische zweite Leistungszweig 8 durch Schließen der Bremse 22 oder durch Schließen der Kupplung 23 dann überbrückt, wenn sich die Arbeitsgeschwindigkeit des Arbeitsaggregats 2 in einem Bereich 27 befindet, in dem sich am Arbeitsaggregat 2 durch rein mechanische Leistungsübertragung vom Verbrennungsmotor 5 her, also bei geschlossener Bremse 22 und/oder geschlossener Kupplung 23 bzw. mit einer Festübersetzung zwischen Verbrennungsmotor und Arbeitsaggregat, ein höheres Antriebsmoment realisieren lässt als mit zugeschalteter Leistungsverzweigung bzw. Aufteilung der Antriebsleistung auf die mechanischen bzw. elektrischen Leistungszweige.

Insbesondere kann die genannte Steuervorrichtung 26 die Sperrvorrichtung 24 dann aktivieren, das heißt die Bremse 22 oder die Kupplung 23 schließen, wenn sich die benötigte Rotordrehzahl des Arbeitsrotors 3 durch eine Verbrennungsmotordrehzahl erzielen lässt, die in einem drehmoment- und/oder verbrauchsgünstigen Bereich der Drehzahlkurve des Verbrennungsmotors liegt und mit dem festen Übersetzungs-/ Untersetzungsverhältnis, das das Summiergetriebe 9 bei gesperrter Sperrvorrichtung 24 besitzt, in die gewünschte Arbeitsrotordrehzahl umsetzbar ist.

Bei vollautomatischer Ausbildung der genannten Steuervorrichtung 26 betätigt diese die Bremse 22 bzw. die Kupplung 23 dann, wenn der Arbeitsrotor 3 sich in dem genannten Drehzahlbereich 27 befindet, vgl. Fig. 4. Bei halbautomatischer Ausbildung kann bspw. auf einer Anzeigevorrichtung ein Signal an den Maschinenführer abgegeben werden, welcher dann die Betätigung der Sperrvorrichtung 24 auslösen kann.

## Patentansprüche

1. Selbstfahrender Oberflächenfräser, mit einem Fräsrotor als Arbeitsaggregat (2), das von einem Motor, insbesondere Verbrennungsmotor, (5) her antreibbar ist, wobei der Motor (5) einen Fahrantrieb bildet und über ein Leistungsverzweigungsgetriebe (6) umfassend einen mechanischen ersten Leistungszweig (7) und einen elektrischen oder hydraulischen zweiten Leistungszweig (8) mit dem Arbeitsaggregat (2) verbindbar ist, wobei die genannten ersten und zweiten Leistungszweige (7, 8) durch ein Summiergetriebe (9) zusammengeführt sind, das abtriebsseitig mit dem Arbeitsaggregat (2) kuppelbar und in einem Innenraum des als zylindrischer, länglicher Fräsrotor ausgebildeten Arbeitsaggregats (2) aufgenommen ist, wobei ein variables Übersetzungsverhältnis zwischen dem mechanischen ersten Leistungszweig (7) und der Abtriebsseite durch eine von dem elektrischen oder hydraulischen zweiten Leistungszweig (8) bereitstellbare Summiergetreibe-Eingangsdrehzahl einstellbar ist, **dadurch gekennzeichnet dass** eine Sperrvorrichtung (24) zum Sperren der Veränderbarkeit des Übersetzungsverhältnisses durch den elektrischen oder hydraulischen zweiten Leistungszweig (8) vorgesehen ist, wobei eine Steuervorrichtung (26) zum automatischen Betätigen der Sperrvorrichtung (24) in Abhängigkeit der Arbeitsgeschwindigkeit des Arbeitsaggregats (2) und in Abhängigkeit der Drehzahl des Motors (5) vorgesehen und derart ausgebildet ist, dass die Sperrvorrichtung (24) das Übersetzungsverhältnis des Summiergetriebes (9) dann sperrt, wenn die Arbeitsgeschwindigkeit des Arbeitsaggregats (2) in einem vorbestimmten Bereich (27) liegt und bei dem genannten gesperrten, festen Übersetzungs-/Untersetzungsverhältnis die Drehzahl des Motors (5) in einem entsprechenden vorbestimmten Bereich liegt, in dem durch rein mechanische Leistungsübertragung ein höheres Antriebsmoment am Arbeitsaggregat (2) erzielt wird als mit zugeschalteter Leistungsverzweigung.

2. Selbstfahrender Oberflächenfräser nach dem vorhergehenden Anspruch, wobei die Sperrvorrichtung (24) Haltemittel (25) zum Festsetzen eines Summiergetriebestrangs (13), an den der genannte elektrische oder hydraulische zweite Leistungszweig (8) angebunden ist, aufweist.

3. Selbstfahrender Oberflächenfräser nach einem der vorhergehenden Ansprüche, wobei die Sperrvorrichtung (24) Haltemittel zum festen Ankuppeln eines Summiergetriebestrangs (13), mit dem der genannte elektrische oder hydraulische zweite Leistungszweig (8) antriebsverbunden ist, an einen weiteren Getriebestrang (12), an den der mechanische erste Leistungszweig (7) angeschlossen ist, aufweist.

4. Selbstfahrender Oberflächenfräser nach Anspruch 2, wobei die genannten Haltemittel (25) eine Bremse (22) zum Stillsetzen des Summiergetriebeeingangsstrangs (13), an den der elektrische oder hydraulische zweite Leistungszweig (8) angebunden ist, aufweisen.

5. Selbstfahrender Oberflächenfräser nach Anspruch 3, wobei die genannten Haltemittel (25) eine Kupplung (23) zum drehfesten Ankuppeln des Summiergetriebeeingangsstrangs (13), an den der elektrische oder hydraulische zweite Leistungszweig (8) angebunden ist, an den weiteren Getriebeeingangsstrang (12), an den der mechanische erste Leistungszweig (7) angebunden ist, aufweisen.

6. Selbstfahrender Oberflächenfräser nach einem der vorhergehenden Ansprüche, wobei das Summiergetriebe (9) ein Planetengetriebe aufweist.

7. Selbstfahrender Oberflächenfräser nach dem vorhergehenden Anspruch, wobei der mechanische erste Leistungszweig (7) mit einem Planetenräder (17) tragenden Steg (16) des Planetengetriebes antriebsverbunden ist und der elektrische oder hydraulische zweite Leistungszweig (8) mit einem Sonnenrad (19) antriebsverbunden ist, das mit den genannten Planetenrädern (17) in Wälzeingriff steht, wobei ein mit den Planetenrädern (17) in Wälzeingriff stehendes Hohlrad (21) eine Abtriebsseite des Planetengetriebes bildet und/oder mit dem Arbeitsaggregat (2) antriebsverbunden ist.

8. Selbstfahrender Oberflächenfräser nach dem vorhergehenden Anspruch in Verbindung mit Anspruch 3, wobei das Sonnenrad (19) von der Bremse (22) direkt oder indirekt blockierbar ist.

9. Selbstfahrender Oberflächenfräser nach Anspruch 6 in Verbindung mit Anspruch 4, wobei das Sonnenrad (19) und der Steg (16) durch die Kupplung (23) zueinander sperrbar sind.

10. Selbstfahrender Oberflächenfräser nach einem der vorhergehenden Ansprüche, wobei der zweite Leistungsweig (8) einen verstellbaren Hydrostaten als Energiewandler (11) umfaßt, der zusammen mit dem Summiergetriebe (9) im Inneren des Arbeitsaggregatrs angeordnet ist.

## Claims

1. A self-propelled surface cutter, having a working rotor as a working assembly (2) that is drivable by an engine, in particular an internal combustion engine (5), wherein the engine (5) forms a traction drive and can be connected to the working assembly (2) via a power split transmission (6) comprising a mechanical first power branch (7) and an electric or hydraulic second power branch (8), wherein the said first and second power branches (7, 8) are combined by a summation transmission (9) that is couplable to the working assembly (2) at the output side and that is received in an inner space of the working assembly (2) which is formed as a cylindrical elongate working rotor, wherein a variable transmission ratio between the mechanical first power branch (7) and the output side can be set by a summation transmission input rotational speed that can be provided by the electric or hydraulic second power branch (8), **characterized in that** a blocking apparatus (24) is provided for blocking the variability of the transmission ratio by the electric or hydraulic second power branch (8), wherein a control apparatus (26) is provided for an automatic actuation of the blocking apparatus (24) in dependence on the working speed of the working assembly (2) and/or in dependence on the rotational speed of the engine (5) and is configured such that the blocking apparatus (24) blocks the transmission ratio of the summation transmission (9) when the working speed of the working assembly (2) is in a predefined range (27) and the rotational speed of the engine (5) is in a corresponding predefined range at said blocked, fixed increased-speed/decreased-speed ratio, in which range a higher driving torque at the working assembly (2) is achieved by purely mechanic power transmission than with connected power branches.

2. A self-propelled surface cutter in accordance with the preceding claim, wherein the blocking apparatus (24) has holding means (25) for stopping a summation transmission train (13) to which said electric or hydraulic second power branch (8) is connected.

3. A self-propelled surface cutter in accordance with one of the preceding claims, wherein the blocking apparatus (24) has holding means for fixedly coupling a summation transmission train (13), to which said electric or hydraulic second power branch (8) is drive-connected, to a further gear train (12) to which the mechanical first power branch (7) is connected.

4. A self-propelled surface cutter in accordance with claim 2, wherein said holding means (25) have a brake (22) for stopping the summation transmission input train (13) to which the electric or hydraulic second power branch (8) is connected.

5. A self-propelled surface cutter in accordance with claim 3, wherein said holding means (25) have a clutch (23) for a rotationally fixed coupling of the summation transmission input train (13) to which the electric or hydraulic second power branch (8) is connected to the further gear input train (12) to which the mechanical first power branch (7) is connected.

6. A self-propelled surface cutter in accordance with one of the preceding claims, wherein the summation transmission (9) comprises a planetary transmission.

7. A self-propelled surface cutter in accordance with the preceding claim, wherein the mechanical first power branch (7) is drive-connected to a web (16) of the planetary transmission carrying planetary gears (17) and the electric or hydraulic second power branch (8) is drive-connected to a sun gear (19) that is in cutting engagement with said planetary gears (17), with a ring gear (21) in cutting engagement with the planetary gears (17) forming an output side of the planetary transmission and/or being drive-connected to the working assembly (2).

8. A self-propelled surface cutter in accordance with the preceding claim in conjunction with claim 3, wherein the sun gear (19) is directly or indirectly blockable by the brake (22).

9. A self-propelled surface cutter in accordance with claim 6 in conjunction with claim 4, wherein the sun gear (19) and the web (16) are blockable with respect to one another by the clutch (23).

10. A self-propelled surface cutter in accordance with one of the preceding claims, wherein the second power branch (8) comprises a hydrostat, preferably an adjustable hydrostat, as the energy converter (11) that is preferably arranged together with the summation transmission (9) in the interior of the working assembly.

## Revendications

1. Fraiseuse de surface automotrice, avec un rotor de fraisage en guise de groupe de travail (2), qui peut être entraîné par un moteur, en particulier par un moteur à combustion (5), dans lequel le moteur (5) forme un dispositif de propulsion et peut être connecté au groupe de travail (2) par l'intermédiaire d'une transmission à répartition de puissance (6) comprenant une première branche de puissance mécanique (7) et une deuxième branche de puissance électrique ou hydraulique (8), dans lequel la première branche de puissance et la deuxième branche de puissance (7, 8) mentionnées sont combinés par une engrenage sommateur (9) qui peut être accouplée côté sortie au groupe de travail (2) et qui est reçu dans un compartiment intérieur du groupe de travail (2) configuré comme un rotor de fraisage oblong et cylindrique, dans lequel un rapport de démultiplication variable entre la première branche de puissance mécanique (7) et le côté sortie est réglable par une vitesse d'entrée de l'engrenage sommateur qui peut être fournie par la deuxième branche de puissance électrique ou hydraulique (8), **caractérisée en ce qu'**un dispositif de blocage (24) est prévu pour bloquer l'altérabilité du rapport de démultiplication par la deuxième branche de puissance électrique ou hydraulique (8), un dispositif de commande (26) étant prévu pour actionner automatiquement le dispositif de blocage (24) en fonction de la vitesse de fonctionnement du groupe de travail (2) ainsi qu'en fonction de la vitesse de rotation du moteur (5) et conçu de telle sorte que le dispositif de blocage (24) bloque le rapport de démultiplication de l'engrenage sommateur (9) lorsque la vitesse de fonctionnement du groupe de travail (2) est dans une plage prédéterminée (27) respective, et lorsque la vitesse de rotation du moteur (5) se trouve, avec ledit rapport de démultiplication/réduction fixe et bloqué, dans une plage prédéterminée correspondante dans laquelle un couple d'entraînement plus élevé qu'avec la répartition de puissance commutée est atteint sur le groupe de travail (2) par une transmission de puissance purement mécanique.

2. Fraiseuse de surface automotrice selon la revendication précédente, dans laquelle le dispositif de blocage (24) comporte des moyens de retenue (25) pour fixer un train de engrenage sommateur (13) auquel est liée ladite deuxième branche de puissance électrique ou hydraulique (8).

3. Fraiseuse de surface automotrice selon l'une quelconque des revendications précédentes, dans laquelle le dispositif de blocage (24) comporte des moyens de retenue pour accoupler de manière fixe un train d'engrenage sommateur (13) avec lequel ladite deuxième branche de puissance électrique ou hydraulique (8) est en liaison d'entrainement, à un autre train d'engrenage (12) auquel est liée la première branche de puissance mécanique (7).

4. Fraiseuse de surface automotrice selon la revendication 2, dans laquelle lesdits moyens de retenue (25) comportent un frein (22) pour immobiliser le train d'entrée de l'engrenage sommateur (13) auquel la deuxième branche de puissance électrique ou hydraulique (8) est liée.

5. Fraiseuse de surface automotrice selon la revendication 3, dans laquelle lesdits moyens de retenue (25) mentionnés comportent un coupleur (23) pour accoupler de manière à éviter toute rotation le train d'entrée de la engrenage sommateur (13), auquel est liée la deuxième branche de puissance électrique ou hydraulique (8), au train d'entrée de transmission (12) supplémentaire, auquel la première branche de puissance mécanique (7) est attachée.

6. Fraiseuse de surface automotrice selon l'une quelconque des revendications précédentes, dans lequel l'engrenage sommateur (9) comporte un engrenage planétaire.

7. Fraiseuse de surface automotrice selon la revendication précédente, la première branche de puissance mécanique (7) étant en liaison d'entrainement avec une traverse (16) porte-satellites (17) de l'engrenage planétaire et en ce que la deuxième branche de puissance électrique ou hydraulique (8) est en liaison d'entrainement avec un pignon solaire (19), qui est en prise roulant avec les satellites (17), dans lequel une roue à dentures intérieure (21) reliée par des dentures engrenées aux satellites (17) forme une côté de sortie de l'engrenage planétaire et/ou est en liaison d'entrainement avec le groupe de travail (2).

8. Fraiseuse de surface automotrice selon la revendication précédente en association avec la revendication 3, dans lequel le planétaire (19) peut être bloqué par le frein (22) de manière directe ou indirecte.

9. Fraiseuse de surface automotrice selon la revendication 6 en association avec la revendication 4, dans lequel le planétaire (19) et la traverse (16) peuvent être bloqués l'un relative à l'autre par le coupleur (23).

10. Fraiseuse de surface automotrice selon l'une quelconque des revendications précédentes, dans lequel la deuxième branche de puissance (8) comprend un hydrostat réglable en tant que convertisseur d'énergie (11), qui est disposé avec l'engrenage sommateur (9) à l'intérieur du groupe de travail.
